# FASCICULE DE BREVET EUROPEEN

(11) **EP 2 999 585 B1**
(45) Date de publication et mention de la délivrance du brevet: **27.02.2019**
(21) Numéro de dépôt: 14731792.9
(22) Date de dépôt: 19.05.2014
(51) Int. Cl.: B30B 9/04, B30B 9/06, B30B 9/26, C02F 11/12, F26B 5/14, C02F 1/44, C02F 1/56, C02F 1/66, C02F 11/14, C02F 103/08

(54) **PROCÉDÉ DE DÉSHYDRATATION POUSSÉE D'UNE BOUE DE RÉSIDUS SALINS**
VERFAHREN ZUR BESCHLEUNIGTEN ENTWÄSSERUNG EINES SCHLAMMS AUS SALZHALTIGEN RÜCKSTÄNDEN
METHOD FOR THE FORCED DEWATERING OF A SLUDGE OF SALINE RESIDUES

(30) Priorité: 21.05.2013 FR 1354528
(43) Date de publication de la demande: 30.03.2016
(73) Titulaire: SUEZ International, 92040 Paris La Défense (FR)
(72) Inventeur: FACCIOLI, Jean-Michel, F-75011 Paris (FR)
(74) Mandataire: IPAZ
(86) Numéro de dépôt international: PCT/IB2014/061534
(87) Numéro de publication internationale: WO 2014/188323

(56) Documents cités:
- WO-A1-2014/178028
- CN-A- 101 643 308
- US-A- 3 207 064
- US-A- 5 143 628
- US-A1- 2010 199 514

## Description

La présente invention concerne un procédé de déshydratation poussée, par pressage, d'une boue de résidus salins, issus d'une production d'eau potable,.

Le domaine de l'invention est la déshydratation d'une boue issue du traitement d'un effluent salin, dans le cas d'une production d'eau potable utilisant un procédé de dessalement d'eau de mer, lesdites boues étant caractérisées par une salinité comprise entre 5 et 50g/l.

A l'heure où les préoccupations environnementales deviennent très importantes et où les économies d'énergie fossile sont recherchées, la déshydratation poussée de boue doit être considérée avec intérêt. Une déshydratation poussée est celle qui permet d'obtenir des siccités élevées, d'au moins 30% , et de réduire les coûts liés aux transports de boues déshydratées vers un Centre d'Enfouissement Technique, désigné par CET en abrégé.

Dans un procédé de déshydratation d'une boue, le conditionnement de la boue avec un polyélectrolyte et la mise en oeuvre d'un pressage sont des étapes importantes pour obtenir une efficacité optimale du procédé.

Le document US5143628 concerne les procédés de déshydratation de boues issues d'un traitement d'eaux résiduaires tandis que le document CN101643308 concerne un procédé de déshydratation des boues salines issues d'un traitement d'eaux industrielles.

Toutefois, les procédés de déshydratation utilisés ne mettent pas en oeuvre un procédé de dessalement d'eau de mer et ne peuvent pas traiter des boues ayant une salinité comprise entre 5 et 50 g/l.

L'invention a pour but, surtout, de fournir un procédé qui permet d'assurer une déshydratation poussée et d'obtenir des siccités élevées, d'au moins 30%, bien que la boue provienne de résidus salins. La siccité de la boue à déshydrater, à l'entrée du pressage, est de l'ordre de quelques pourcents, généralement de 2 à 10% . Il est souhaitable, en outre que la consommation d'énergie soit limitée pour assurer la déshydratation.

Selon l'invention, le procédé de déshydratation poussée, par pressage, de résidus salins issus d'une production d'eau potable utilisant un procédé de dessalement d'eau de mer, lesdites boues étant caractérisées par une salinité comprise entre 5 et 50g/l, est caractérisé en ce que les résidus salins sont introduits dans le cylindre d'une presse à piston comportant des drains souples formés par des gaines flexibles en matière perméable au liquide mais imperméable à l'égard des solides, chaque drain comportant un passage intérieur qui débouche dans une ouverture associée, la presse fonctionnant par fournée (c'est-à-dire en batch), et en ce que lors du pressage, le piston effectue des mouvements d'aller et retour et applique des pressions alternatives et variables sur la boue, tandis que les drains souples se déforment, le liquide exprimé du produit traversant la paroi des drains et étant évacué comme filtrat, tandis que les boues déshydratées demeurent à l'extérieur des drains et sont évacuées par ouverture de la presse.

Le procédé de déshydratation poussée est aussi caractérisé en ce que l'on effectue une injection d'eau potable selon un volume compris entre 50% et 150% du volume des boues soumises à un cycle de déshydratation, cette injection étant effectuée pendant le cycle de déshydratation ou lors de la phase de remplissage en boues de la presse à piston selon un dosage suffisamment élevé, pour réduire la concentration en sels des boues déshydratées tout en conservant une siccité élevée.

Un renouvellement des interfaces entre la boue et la paroi filtrante des drains a lieu au sein de la presse. La boue déshydratée sortant de la presse présente une siccité supérieure à 30%, de préférence supérieure à 35%.

L'invention permet d'obtenir, malgré la présence de sels, une boue de résidus salins ayant une siccité élevée, supérieure à celle de l'ordre de 22% obtenue avec des centrifugeuses, avec une consommation d'énergie relativement faible.

Il convient de noter la difficulté de trouver une destination pour une boue déshydratée concentrée en sels, en minimisant l'impact sur environnement. L'invention a également pour but de réduire la concentration en sels de la boue déshydratée. Pour cela, on modifie, lors du cycle de fonctionnement de la presse à piston, la qualité de la boue par l'introduction d'une quantité d'eau potable additionnée ou non d'un réactif fortement alcalin, en particulier à pH supérieur à 11, afin d'obtenir une boue déshydratée moins polluante pour l'environnement et/ou d'obtenir une composition du filtrat, issu de la déshydratation, dont le rejet en milieu naturel peut être envisagé.

Le volume d'eau est généralement injecté en plusieurs fractions, dont le total correspond au volume souhaité.

On peut effectuer une injection d'eau potable additionnée d'un réactif fortement alcalin, pendant le processus de déshydratation, selon un dosage suffisamment élevé, pour précipiter les métaux dans la boue déshydratée, et augmenter la siccité finale de la boue déshydratée à une valeur supérieure à 35%.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est un schéma d'une installation de déshydratation poussée par presse à piston, selon l'invention.
Fig. 2 à 4 illustrent les trois phases du cycle de déshydratation de la presse à piston.
Fig. 5 est un schéma du système d'injection d'eau dans la pompe à piston, additionnée ou non d'un réactif fortement alcalin, et
Fig. 6 est un schéma d'une installation de dessalement d'eau de mer par osmose inverse.

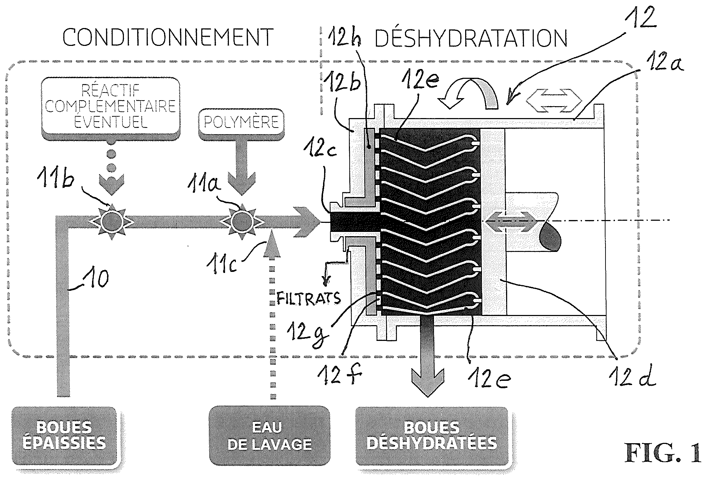

Les boues traitées par le procédé de l'invention peuvent présenter une salinité comprise entre 5g/L, correspondant à des eaux saumâtres, et 50g/L. Comme visible sur Fig. 1, les boues de résidus salins, de préférence épaissies à une siccité de 2 à 10% , arrivent par une conduite 10 qui comporte un branchement 11a pour une injection éventuelle de polymère, un branchement 11b pour une injection éventuelle de réactif complémentaire, et un branchement 11c pour une injection d'eau de lavage. La conduite 10 est raccordée, en aval desdits branchements au canal d'entrée 12c d'une presse 12 à piston 12d.

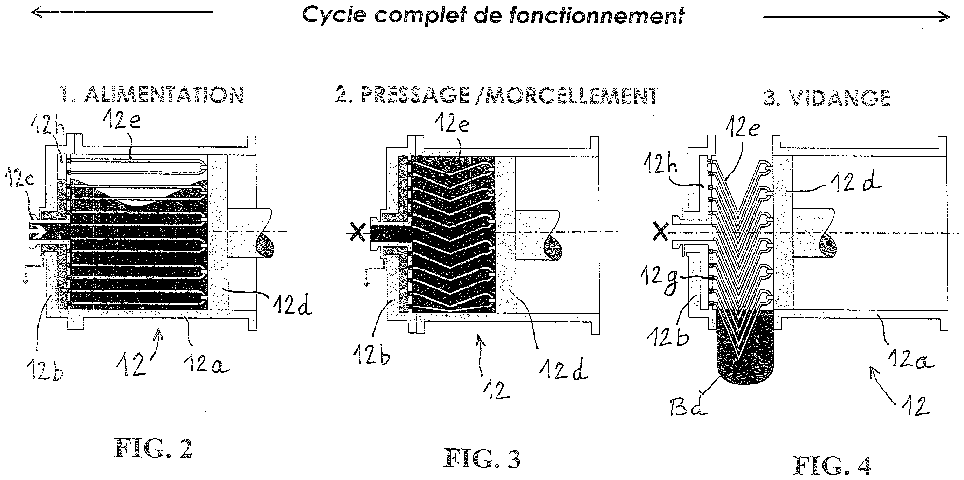

La presse 12 comporte un cylindre 12a dont une extrémité, située sur la gauche selon Fig. 1- Fig.4, est fermée de manière étanche par une plaque 12b, qui peut en être écartée suivant la direction axiale comme illustré sur Fig. 4.

Le produit à presser est introduit dans le cylindre 12a par le canal d'entrée 12c prévu au centre de la plaque 12b. A distance de la plaque 12b le piston 12d, soumis à une pression hydraulique ou pneumatique, peut coulisser de manière étanche dans le cylindre 12 pour exercer un pressage des produits introduits dans le cylindre 12. Des éléments de drainage, ou drains 12e, formés par des gaines flexibles en matière perméable au liquide mais imperméable à l'égard des solides, sont fixés à une contre-plaque 12f écartée de la plaque 12b, mais liée à celle-ci. Chaque drain 12e comporte un passage intérieur qui débouche dans une ouverture 12g associée, prévue dans la contre-plaque 12f. Les ouvertures 12g communiquent avec une chambre 12h, comprise entre la contre-plaque 12f et la plaque 12b. La chambre 12h recueille le liquide, essentiellement de l'eau, constituant le filtrat évacué vers l'extérieur.

A l'opposé de la contre-plaque 12f, les drains 12e sont liés au piston 12d. Les drains 12e s'étendent sensiblement parallèlement à l'axe géométrique du cylindre 12a lorsque le piston est éloigné au maximum de la plaque 12b.

Lors du pressage, le piston 12d effectue des mouvements d'aller et retour suivant la direction de l'axe du cylindre 12a, tandis que la plaque 12b est maintenue contre l'extrémité du cylindre 12a. Les drains souples 12e se déforment ; le liquide exprimé du produit traverse la paroi des drains 12e et est évacué de la chambre 12h. Lors de l'opération de pressage, le cylindre 12a, le piston 12d et les plaques 12b, 12f sont en outre entraînés en rotation autour de l'axe géométrique du cylindre 12a.

Lorsque le pressage est terminé, une évacuation de la boue pressée Bd est effectuée comme illustré sur Fig. 4. La plaque 12b est décalée pour permettre l'ouverture de la chambre ; le piston 12d est amené à l'extrémité du cylindre 12a tournée vers la plaque 12b. La matière pressée Bd s'échappe par gravité dans l'espace ainsi libéré tandis que les drains 12e prennent une configuration en V.

Le procédé fonctionne par fournées, c'est-à-dire « en batch », suivant trois phases :
- alimentation en boue de la presse, comme illustré sur Fig.2,
- pressage et morcellement, comme illustré sur Fig.3,
- et vidange de la boue déshydratée Bd, comme illustré sur Fig.4.

Généralement, plusieurs phases d'alimentation et de pressage sont effectuées avant une phase de vidange.

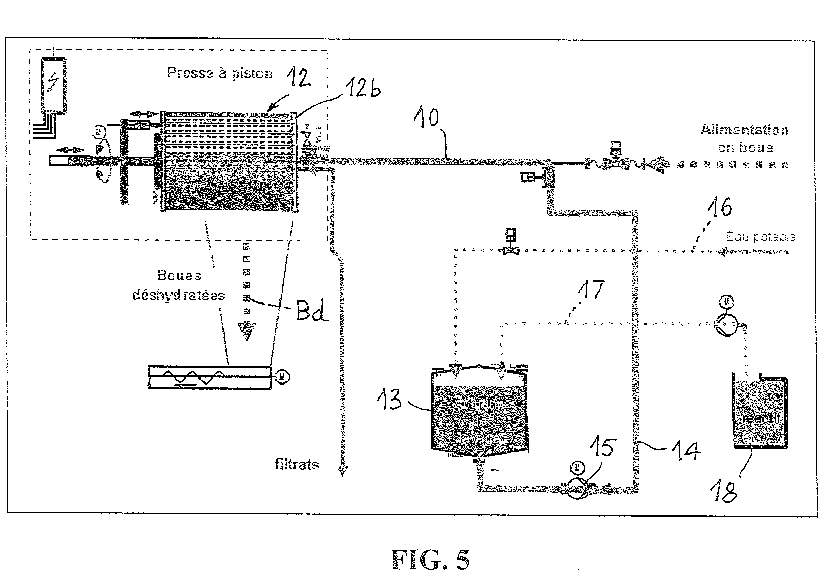

Le schéma de Fig.5 illustre un circuit d'injection d'une solution de lavage de la presse à piston 12, représentée dans une position retournée gauche/droite par rapport aux Fig.1 - 4. Une solution de lavage, à base d'eau potable, est contenue dans un réservoir 13. Une conduite 14, sur laquelle est installée une pompe 15, est raccordée à la conduite 10 d'alimentation de la presse 12. La mise en marche de la pompe 15 permet d'injecter de l'eau dans la presse 12. Une conduite 16 alimente le réservoir 13 en eau potable, tandis qu'une conduite 17 permet d'injecter dans le réservoir 13 un réactif alcalin pompé dans un réservoir 18.

Une injection d'eau potable dans la presse 12 en mouvement, pendant la phase remplissage en boue, permet de parfaire le processus de floculation de la boue à l'aide d'un polymère, en optimisant l'action électrochimique du polyélectrolyte sur les particules en suspension dans la boue, ce qui améliore la séparation liquide / solide et la siccité de la boue résultant de la déshydratation.

L'injection d'eau potable permet de réduire la concentration en sels de la boue après déshydratation. Les sels sont passés dans le filtrat .Le rejet du filtrat en milieu naturel, notamment en mer, peut être envisagé, en accord avec la législation environnementale en vigueur.

Des essais comparatifs ont été effectués :
- déshydratation sans lavage;
- déshydratation avec lavage à l'eau potable en fin de phase de remplissage
- déshydratation avec lavage à l'eau potable avec réactif fortement alcalin (pH supérieur ou égal à 11) en fin de phase de remplissage.

La quantité de boues admise dans la presse à piston est exprimée en Kg MS (kilogrammes de matières sèches). Le volume de boues peut être déduit de la teneur en MS de la boue, qui est de l'ordre de 35g/L, soit un volume de boues d'environ 350 L pour 12.2 Kg MS.

Les résultats obtenus sont les suivants :

| Mode opératoire de l'essai | Quantité de boue admise dans la presse (KgMS) | Quantité d'eau potable injectée (litres) | Siccité de la boue déshydratée (%) | Conductivité électrique (mS/cm) de la boue après déshydratation |
|---|---|---|---|---|
| Déshydratation sans lavage mise en oeuvre | 12.2 | 0 | 36.8 | > 10 |
| Déshydratation avec lavage à l'eau potable en fin de la phase de remplissage | 12.2 | 400 | 40.3 | > 5 |
| Déshydratation avec lavage à l'eau potable avec réactif fortement alcalin en fin de la phase de remplissage | 14.62 | 500 | 48 | < 1 |

Ces résultats ont été obtenus avec une même alimentation en boue constituée par un résidu d'un traitement de dessalement d'eau de mer dont la salinité est de 36.5 g/L.

Le lavage permet d'améliorer la siccité, sans doute en favorisant l'action du polymère et la floculation, et permet de réduire la salinité de la boue déshydratée, comme indiqué par la baisse de la conductivité électrique dans la colonne droite du tableau ci-dessus.

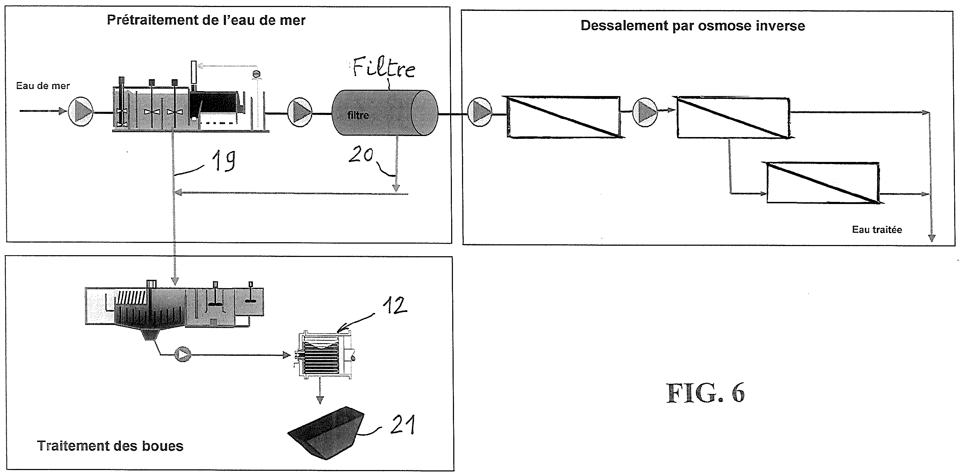

L'invention peut s'appliquer aux installations de production d'eau potable utilisant un procédé de dessalement d'eau de mer, en particulier à une installation de dessalement d'eau de mer par osmose inverse représentée sur Fig.6. Le prétraitement de l'eau de mer génère des boues qui sont dirigées par des conduites 19, 20 vers un traitement des boues comportant la presse à piston 12. Les boues déshydratées sont récupérées dans une benne 21 pour être évacuées.

La déshydratation, selon le procédé de l'invention, peut être effectuée avec ou sans ajout de polymère, avec ou sans ajout de chaux ou de réactif alcalin.

### Applications industrielles

Le procédé de déshydratation poussée et son dispositif de lavage selon l'invention peuvent s'appliquer lorsque le rejet en mer de déchet concentré en sels est prohibé ou réglementé et que l'exutoire d'une boue issue d'un traitement d'effluent salin est un CET (Centre d'enfouissement Technique) dont la classe dépendra de la salinité du produit admis.

La siccité élevée réduira significativement la production de GES (gaz à effet de serre) issus du transport routier de la boue jusqu'au CET lorsque celui-ci est éloigné de l'usine de traitement produisant un résidu concentré en sels.

## Revendications

1. Procédé de déshydratation poussée, par pressage, de boues de résidus salins issues d'une production d'eau potable utilisant un procédé de dessalement d'eau de mer, lesdites boues étant **caractérisées par** une salinité comprise entre 5 et 50g/l, , lesdites boues de résidus salins étant introduites dans le cylindre (12a) d'une presse à piston (12) comportant des drains souples (12e) formés par des gaines flexibles en matière perméable au liquide mais imperméable à l'égard des solides, chaque drain (12e) comportant un passage intérieur qui débouche dans une ouverture (12g) associée, la presse fonctionnant par fournée, et en ce que lors du pressage, le piston effectue des mouvements d'aller et retour et applique des pressions alternatives et variables sur les boues, tandis que les drains souples se déforment, le liquide exprimé du produit traversant la paroi des drains et étant évacué comme filtrat, tandis que les boues déshydratées demeurent à l'extérieur des drains et sont évacuées par ouverture de la presse, **caractérisé en ce que** l'on effectue une injection d'eau potable selon un volume compris entre 50% et 150% du volume des boues soumises à un cycle de déshydratation, cette injection étant effectuée pendant le cycle de déshydratation ou lors de la phase de remplissage en boues de la presse à piston selon un dosage suffisamment élevé, pour réduire la concentration en sels des boues déshydratées tout en conservant une siccité élevée.

2. Procédé selon la revendication 1, **caractérisé en ce que** les boues produites sortant de la presse présentent une siccité supérieure à 30%, de préférence supérieure à 35%.

3. Procédé selon la revendication 1 ou 2, **caractérisé en ce que** l'on effectue l'injection d'eau potable additionnée d'un réactif fortement alcalin, pendant le processus de déshydratation, selon un dosage suffisamment élevé, pour précipiter les métaux dans les boues déshydratées, augmentant la siccité finale des boues déshydratées.

## Patentansprüche

1. Verfahren zur beschleunigten Entwässerung durch Pressen von Schlämmen aus salzhaltigen Rückständen aus einer Trinkwassererzeugung, die ein Verfahren zum Entsalzen von Meerwasser benutzt, wobei diese Schlämme durch einen Salzgehalt zwischen 5 und 50 g/L gekennzeichnet sind, diese Schlämme aus salzhaltigen Rückständen in den Zylinder (12a) einer Kolbenpresse (12) gepresst werden, die biegsame Leitungen (12e) umfasst, die durch flexible Ummantelungen aus einem flüssigkeitsdurchlässigen aber gegenüber Feststoffen undurchlässigen Material gebildet werden, wobei jede Leitung (12e) einen inneren Durchgang umfasst, der in eine dazugehörige Öffnung (12g) mündet, wobei die Presse chargenweise funktioniert, und der Kolben sich beim Pressen hin- und herbewegt und abwechselnde und variable Drücke auf die Schlämme ausübt, während die biegsamen Leitungen sich verformen, wobei die aus dem Produkt gepresste Flüssigkeit die Wand der Leitungen durchquert und als Filtrat abgeführt wird, während die entwässerten Schlämme außerhalb der Leitungen verbleiben und durch die Öffnung der Presse abgeführt werden, **dadurch gekennzeichnet, dass** eine Einspritzung von Trinkwasser entsprechend einem Volumen zwischen 50% und 150% des Volumens der einem Entwässerungszyklus unterworfenen Schlämme durchgeführt wird, wobei diese Einspritzung während des Entwässerungszyklus oder während der Schlammauffüllphase der Kolbenpresse mit einer ausreichend hohen Dosierung durchgeführt wird, um die Salzkonzentration der entwässerten Schlämme zu verringern, wobei ein erhöhter Trockenheitsgrad bewahrt wird.

2. Verfahren gemäss Anspruch 1, **dadurch gekennzeichnet, dass** die aus der Presse entweichenden erzeugten Schlämme einen Trockenheitsgrad von über 30%, bevorzugterweise von über 35% aufweisen.

3. Verfahren gemäss Anspruch 1 oder 2, **dadurch gekennzeichnet, dass** die Einspritzung von Trinkwasser mit einem Zusatz eines stark alkalischen Reagenzes mit einer zum Fällen der in den entwässerten Schlämmen enthaltenen Metalle ausreichend hohen Dosierung während des Entwässerungsvorgangs durchgeführt wird, wodurch der endgültige Trockenheitsgrad der entwässerten Schlämme gesteigert wird.

## Claims

1. A process for the extensive dewatering, by pressing, of sludge of saline residues resulting from drinking water production using a desalination process, said sludge having a salinity of between 5 g/l and 50 g/l, said sludge of saline residues being introduced into the cylinder (12a) of a piston press (12) comprising flexible drains (12e) formed by flexible sheaths made from a material that is permeable to liquid but impermeable to solids, each drain (12e) comprising an inner passage that opens into an associated opening (12g), the press operating in batches, and in that, during the pressing, the piston carries out reciprocal movements and applies alternating and variable pressures to the sludge, while the flexible drains are deformed, the liquid pressed out of the product passing through the wall of the drains and being discharged as a filtrate, while the dewatered sludge remains outside the drains and is discharged by opening the press, **characterized in that** an injection of drinking water is carried out according to a volume of between 50% and 150% of the volume of the sludge subjected to a dewatering cycle, this injection of drinking water being carried out during the dewatering cycle or during the phase of filling the piston press with sludge, according to a sufficiently high dosage, in order to reduce the salt concentration of the dewatered sludge while preserving a high dryness.

2. The process as claimed in claim 1, **characterized in that** the produced sludge leaving the press has a dryness of greater than 30%, preferably greater than 35%.

3. The process as claimed in claim 1 or 2, **characterized in that** the injection of drinking water to which a strongly alkaline reagent has been added is carried out during the dewatering process, according to a sufficiently high dosage, in order to precipitate the metals from the dewatered sludge, increasing the final dryness of the dewatered sludge.
